# EUROPÄISCHE PATENTANMELDUNG

(11) **EP 3 367 045 A1**
(43) Veröffentlichungstag der Anmeldung: **29.08.2018**
(21) Anmeldenummer: 18158320.4
(22) Anmeldetag: 23.02.2018
(51) Int. Cl.: F41G 3/02, F41G 3/04, F41G 3/16, G06T 7/00, G06T 7/70

(54) **VERFAHREN UND VORRICHTUNG ZUR VERBESSERUNG DER PRÄZISION VON FEUERLEITLÖSUNGEN**

(30) Priorität: 24.02.2017 DE 102017103901
(71) Anmelder: Krauss-Maffei Wegmann GmbH & Co. KG, 80997 München (DE)
(72) Erfinder: MUSER, Christoph, 80997 München (DE); BACHMANN, Jörg, 34127 Kassel (DE)
(74) Vertreter: Feder Walter Ebert

(57) **Zusammenfassung**

Vorrichtung und Verfahren zur Ermittlung einer Feuerleitlösung, wobei das Verfahren die Ermittlung einer Zielposition (06) und die Übermittlung der Zielposition (06) an eine Feuerleiteinrichtung (02) umfasst und die Zielposition (06) eines zu bekämpfenden Ziels (04) in einer Realumgebung (05) mit einer georeferenzierten Simulationsdatenbasis (09), welche eine die Realumgebung (05) geospezifisch abbildende Simulationsumgebung (11) umfasst, bestimmt wird.

## Beschreibung

Die vorliegende Erfindung betrifft ein Verfahren zur Ermittlung einer Feuerleitlösung, umfassend die Ermittlung einer Zielposition und die Übermittlung der Zielposition an eine Feuerleiteinrichtung. Ferner umfasst die vorliegende Erfindung eine Vorrichtung zur Ermittlung zumindest einer Zielposition und zur Übermittlung der Zielposition an eine Feuerleiteinrichtung zur Ermittlung einer Feuerleitlösung.

Feuerleitlösungen kommen insbesondere, keinesfalls jedoch ausschließlich bei Waffensystemen mit einer hohen Reichweite, wie beispielsweise Artilleriewaffensystemen zum Einsatz. Eine entsprechende Feuerleitlösung bildet die Grundlage für einen effektiven und präzisen Einsatz solcher Waffensysteme. Derartige Waffensysteme stellen eine der wichtigsten Unterstützungsfunktionen in modernen militärischen Konflikten dar. Als flexibel einsetzbare Systeme können diese offensiv als auch defensiv eingesetzt werden.

Die Präzision solcher Waffensysteme hat in der Vergangenheit deutlich zugenommen. Moderne Waffensysteme ermöglichen durch hohe Fertigungsgüte, die Verwendung modernster Munition und verbesserte Feuerleittechnik eine hohe Treffergenauigkeit. Dies ermöglicht vor allem die Minimierung von Kollateralschäden sowie die Vermeidung der Gefährdung eigener oder verbündeter Kräfte.

Die Feuerleittechnik bzw. die Verfahren zur Ermittlung einer Feuerleitlösung umfassen seit jeher im Wesentlichen die folgenden Verfahrensschritte: Feststellung der eigenen Position (Position des Waffensystems), Feststellung der eigenen Ausrichtung (Ausrichtung des Waffensystems), Feststellung der Zielrichtung, Bestimmung der Distanz zwischen der eigenen Position und der Zielposition, ggf. Feststellung der Zielachsen, Zielausdehnung und/oder Bewegungsrichtung des Ziels, Festlegung der Zielparameter und schließlich die Berechnung der einzelnen Parameter der Feuerleitlösung und deren Übermittlung an das Waffensystem.

Dabei entsteht das grundlegende Problem, dass mitunter alle der vorangehend genannten Einzelschritte eines Verfahrens zur Ermittlung einer Feuerleitlösung fehlerbehaftet sind oder potenziell fehlerbehaftet sein können, wobei sich durch die Abhängigkeit der endgültigen Feuerleitlösung von allen der vorangehend aufgezählten Schritten eine Fehlerfortpflanzung ergibt, die zu einem Gesamtfehler führen kann, der mitunter deutlich größer als die einzelnen Fehler ausfällt und damit einen erheblichen Einfluss auf die Präzision und die Zielgenauigkeit von Waffensystemen haben kann, die sich derartiger Feuerleitlösungen bedienen.

Dabei hat sich herausgestellt, dass insbesondere die Festlegung der Zielrichtung und die Bestimmung der Distanz zwischen der eigenen Position und der Zielposition gleichermaßen fehlerbehaftet sein können und zu einer entsprechend verstärkten Fehlerfortpflanzung führen kann. Dies gilt insbesondere, wenn die Bestimmung der Zielposition, ausgehend von der die Zielrichtung und die Distanz zur eigenen Position, berechnet wird, ungenau oder fehlerhaft bestimmt wird.

Zur Bestimmung der Zielposition kommen dabei bisher Verfahren zum Einsatz, bei denen beispielsweise auf Grundlage einer Geländekarte die Zielposition bestimmt wird. Alternativ zu einem derartigen "Kartenschießen" kann auch von einem Beobachter, der einen visuellen Kontakt zu dem zu bekämpfenden Ziel herstellen kann, zunächst die eigene Position also eine Beobachtungsposition und anschließend die Richtung und Entfernung zu dem zu bekämpfenden Ziel bestimmt werden, woraus schließlich die Zielposition rechnerisch abgeleitet werden kann. Dabei sind jedoch alle vorausgehend genannten Verfahren sowie deren Einzelschritte abermals potenziell fehlerbehaftet. Lediglich beispielhaft seien hierbei die begrenzte Auflösung von Geländekarten sowie die Möglichkeit von Ablese- und Übermittlungsfehlern im Rahmen des Kartenschießens und die fehlerhafte Bestimmung der eigenen Position oder Beobachtungsposition sowie eine fehlerhafte und ungenaue Messung der Richtung und des Abstands zum Ziel sowie ebenfalls Übertragungsfehler genannt.

Ausgehend von dieser Situation stellt sich die vorliegende Erfindung die **Aufgabe**, ein Verfahren zur Ermittlung einer Feuerleitlösung anzugeben, bei dem die Nachteile des Standes der Technik eliminiert oder minimiert werden. Insbesondere liegt die Aufgabe darin, die Präzision einer Feuerleitlösung zu erhöhen.

**Gelöst** wird diese Aufgabe bei einem Verfahren der eingangs genannten Art dadurch, dass die Zielposition eines zu bekämpfenden Ziels in einer Realumgebung mit einer georeferenzierten Simulationsdatenbasis, welche eine die Realumgebung geospezifisch abbildende Simulationsumgebung umfasst, bestimmt wird.

Dadurch werden verschiedene vorteilhafte Wirkungen erreicht. Ein erster Vorteil besteht darin, dass in jüngster Vergangenheit die Realumgebung georeferenziert abbildende Simulationsdatenbasen entwickelt wurden, die einerseits eine besonders hohe räumliche Auflösung von bis zu 5 cm in jeder Raumrichtung bieten und darüber hinaus innerhalb von kürzester Zeit generiert oder aktualisiert werden können. Damit wird eine hoch präzise Bestimmung der Zielposition, bis auf wenige Zentimeter genau, möglich.

Darüber hinaus besteht ein weiterer Vorteil darin, dass die Simulationsumgebungen entsprechender Simulationsdatenbasen ein besonders hohes Maß an Realitätstreue aufweisen und damit die Realumgebung aus verschiedensten Perspektiven besonders natur- und realitätsgetreu abbilden können, so dass neben der genauen Bestimmung der Zielposition auch eine besonders gute, einfache und zuverlässige Identifizierung der Zielposition ermöglicht wird. Dies bedeutet, dass es bei einer Bestimmung der Zielposition mit einer georeferenzierten, ggf. geospezifischen Simulationsdatenbasis einem Bediener besonders einfach gelingt, die richtige Zielposition zu identifizieren, so dass Ablesefehler aufgrund von Verwechselungen in Kartendarstellungen, wie sie beispielsweise bei dem "Kartenschießen", insbesondere in entsprechenden Stresssituationen seitens des Bedieners mitunter vorkommen, verhindert oder minimiert werden können.

Weiterhin besteht ein besonderer Vorteil darin, dass beim Einsatz georeferenzierter Simulationsdatenbasen zur Bestimmung der Zielposition eines zu bekämpfenden Ziels die Simulationsdatenbasis über die Georeferenzierung einen festen Bezug zu einem Koordinatensystem der Realumgebung aufweist, so dass die Bestimmung der Zielposition in der Realumgebung verbessert oder einfacher gestaltet werden kann. Dies bedeutet, dass durch die Verwendung einer georeferenzierten Simulationsdatenbasis Auslese- oder Ablesefehler eines Benutzers weitestgehend eliminiert werden können.

Wie anhand der vorangehend beschriebenen Vorteile deutlich wird, eliminiert das erfindungsgemäße Verfahren eine Vielzahl potenzieller Fehlerquellen bei der Bestimmung einer Zielposition eines zu bekämpfenden Ziels in der Realumgebung. Dadurch kann die Zielposition um ein Vielfaches zuverlässiger und genauer bestimmt werden, was sich wiederum über die entsprechenden Fehlerfortpflanzungen im Verfahren zur Ermittlung einer Feuerleitlösung auf die Gesamtpräzision der Feuerleitlösung positiv auswirkt.

Bei der Simulationsumgebung der Simulationsdatenbasis kann es sich beispielsweise um eine Simulationsumgebung auf der Basis einer Punktwolke oder um eine Simulationsumgebung auf der Grundlage eines Höhenrasters handeln. Dementsprechend können die Simulationsumgebungen als 2,5-dimensionale oder dreidimensionale Simulationsumgebungen ausgestaltet sein. Darüber hinaus können die Simulationsumgebungen entsprechender georeferenzierter Simulationsdatenbasen realitätsgetreue Oberflächentexturen zur Texturierung der Oberflächen der Simulationsumgebung umfassen, die beispielsweise aus Bildaufnahmen der Realumgebung gewonnen werden können. Die Simulationsdatenbasis kann beispielsweise auf der Grundlage von Bildaufnahmen erzeugt werden, die bei einem Überflug über die Realumgebung und/oder eine Durchfahrt durch die Realumgebung aufgenommen wurden. Die Georeferenzierung kann dabei anhand einer entsprechenden Dokumentation über die Position, Ausrichtung und Eigenschaften einer Aufnahmevorrichtung bei der jeweiligen Aufnahme erreicht werden. Die Texturierung der Simulationsumgebung kann auf der lagerichtigen Projektion von Bildaufnahmen basieren, welche auch zur Erzeugung des Oberflächenmodells, also der 2,5-dimensionalen oder dreidimensionalen Oberfläche der Simulationsumgebung dienen.

Gemäß einer ersten vorteilhaften Ausführungsform kann vorgesehen sein, dass die Bestimmung der Zielposition auch die Bestimmung einer Zielausdehnung umfasst, wobei die Bestimmung der Zielausdehnung ebenfalls mit der georeferenzierten Simulationsdatenbasis durchgeführt werden kann. Die Bestimmung einer Ausdehnung kann beispielsweise anhand von zwei oder mehr Punkten der die Realumgebung geospezifisch abbildenden Simulationsumgebung erfolgen, wobei aus den zwei oder mehr Punkten eine Fläche oder ein Volumen in der Simulationsumgebung bestimmt wird, woraus über die Georeferenzierung der Simulationsdatenbasis eine Zielausdehnung sowie eine Zielposition in der Realumgebung abgeleitet werden kann. Auch dabei stellen sich die hinsichtlich der Zielposition oben bereits angeführten Vorteile bezüglich der Verbesserung der Präzision ein, so dass auch für zu bekämpfende Ziele mit einer flächenmäßigen oder sogar räumlichen Ausdehnung präzisere Feuerleitlösungen bestimmt und damit eine sicherere und effektivere Bekämpfung derartiger Ziele gewährleistet werden kann.

Eine weitere, besonders bevorzugte Ausführungsform des Verfahrens sieht vor, dass zur Bestimmung der Zielposition und/oder der Zielausdehnung eines zu bekämpfenden Ziels zumindest ein Teil der Simulationsumgebung dargestellt, insbesondere grafisch dargestellt wird. Dadurch können die besonderen Vorzüge der georeferenzierten und die Realumgebung geospezifisch abbildenden Simulationsumgebungen besonders gut ausgenutzt werden, da dadurch die hohe Realitätsnähe der Simulationsumgebung ausgenutzt und die leichte Identifikation einer Zielposition und/oder Zielausdehnung erreicht wird. Vorteilhaft kann dabei vorgesehen sein, dass der Teil der Simulationsumgebung dargestellt wird, in dem sich das zu bekämpfende Ziel befinden würde, soweit das zu bekämpfende Ziel ebenfalls georeferenziert in die Simulationsumgebung übertragen werden würde.

Ebenfalls kann vorgesehen sein, dass sich der dargestellte Teil der Simulationsumgebung durch einen Benutzer bestimmen oder manipulieren lässt. Dabei kann vorgesehen sein, dass sowohl die Auflösung als auch der Ausschnitt der Simulationsumgebung bestimmt oder verändert werden kann. Gleichermaßen kann auch eine Veränderung der Perspektive vorgesehen sein.

Weiterhin kann besonders vorteilhaft vorgesehen sein, dass die Darstellung der Simulationsumgebung in Form einer Kartendarstellung erfolgt. Dadurch könnte sozusagen ein optimiertes "Kartenschießen" erreicht werden, bei dem jedoch zur Ermittlung der Feuerleitlösung ein Großteil der Fehlerquellen des klassischen Kartenschießens anhand einer üblichen Geländekarte eliminiert oder minimiert sind.

Alternativ kann jedoch auch vorgesehen sein, dass die Darstellung der Simulationsumgebung oder eines Teils der Simulationsumgebung in einer perspektivischen beispielsweise in einer vogelperspektivischen Darstellungsart erfolgt. Eine derartige Darstellungsart hat den Vorteil, dass das hohe Maß an Realitätstreue der geospezifischen Simulationsumgebung zur korrekten, zuverlässigen und genauen Identifizierung einer Zielposition verwendet werden kann.

Besonders vorteilhaft kann außerdem vorgesehen sein, dass zur Bestimmung der Zielposition und/oder Zielausdehnung eines zu bekämpfenden Ziels zumindest einen Teil der Simulationsumgebung überlagert zu einem entsprechenden Teil in der Realumgebung dargestellt wird. Daraus ergeben sich verschiedene Vorteile. Einerseits gewährleistet eine derartige Überlagerung von Darstellungen der Simulationsumgebung einerseits und der Realumgebung andererseits, dass das zu bekämpfende Ziel ebenfalls dargestellt wird und dementsprechend eine noch zuverlässigere Identifizierung und Bestimmung der Zielposition und Zielausdehnung durchgeführt werden kann. Außerdem erhöht eine solche kombinierte oder überlagerte Darstellung noch weiter die Realitätsnähe der Darstellung der Simulationsumgebung, was ebenfalls zu einer einwandfreien Identifizierung und Bestimmung der Zielposition und Zielausdehnung beiträgt. Eine solche überlagerte Darstellung kann beispielsweise anhand von Darstellungssystemen zur Darstellung erweiterter Realitäten (augmented reality) gewährleistet werden, die beispielsweise unter Verwendung entsprechender Brillen oder anderer Sichtgeräte eine Darstellung der Realumgebung mit einer Darstellung einer Simulationsumgebung positions- und/oder lagerichtig überlagern können.

Dabei kann besonders vorteilhaft vorgesehen werden, dass die Darstellung der Simulationsumgebung aus einem virtuellen Blickpunkt und entlang einer virtuellen Blickrichtung erfolgt, welche anhand einer Realposition und einer realen Blickrichtung einer Abbildung der Realumgebung abgeleitet werden. Bei der Realposition und der realen Blickrichtung kann es sich beispielsweise um die Position und Blickrichtung eines Benutzers handeln, der beispielsweise mit einer Datenbrille oder einer sonstigen Augmented-Reality-Darstellungseinheit ausgestattet ist. Dabei kann vorgesehen sein, dass der Benutzer, insbesondere der Beobachter eines zu bekämpfenden Ziels mit entsprechender Sensorik ausgestattet wird, die es erlaubt, die reale Position und die reale Blickrichtung des Benutzers zu erfassen.

Besonders vorteilhaft an einer derartig überlagerten Darstellung der Simulationsumgebung ist, dass sie einerseits eine besonders intuitive und effektive Bestimmung der Zielposition und/oder der Zielausdehnung des zu bekämpfenden Ziels ermöglicht und zudem ggf. sogar für eine Verifizierung oder eine Korrektur im Rahmen des Verfahrens zur Ermittlung einer Feuerleitlösung eingesetzt werden kann. Denn wenn bei einer gleichzeitigen oder überlagerten Darstellung eines Teils der Realumgebung sowie eines Teils der Simulationsumgebung, bei der die virtuelle Position und der virtuelle Blickwinkel mit der Realposition und der realen Blickrichtung in Übereinstimmung gebracht werden soll, für den Benutzer ein entsprechender Versatz feststellbar ist, so kann dieser Versatz einerseits vom Benutzer durch entsprechende Eingabe eliminiert werden und andererseits der Versatz und/oder dessen Korrektur als Fehler in die Bestimmung der Eigenposition des Benutzers oder Beobachters mit eingehen und dementsprechend auch zur Korrektur der Eigenposition des Benutzers verwendet werden, die ihrerseits ggf. in die Ermittlung der Feuerleitlösung mit eingeht oder in dieser berücksichtigt wird, beispielsweise um den Beobachter nicht zu gefährden.

In einer weiteren, besonders bevorzugten Ausgestaltung des Verfahrens zur Ermittlung einer Feuerleitlösung kann vorgesehen sein, dass zur Bestimmung der Zielposition und/oder Zielausdehnung eines zu bekämpfenden Ziels mit zumindest einer Markierung einer Position und/oder einer Fläche und/oder eines Volumens in der Darstellung der Simulationsumgebung erfolgt. Dadurch können, wie oben bereits ausgeführt, in besonders vorteilhafter Weise die Vorteile einer georeferenzierten Simulationsdatenbasis sowie einer entsprechend geospezifisch ausgebildeten Simulationsumgebung genutzt werden, um eine korrekte und genaue Bestimmung der Zielposition und/oder Zielausdehnung in der Realumgebung zu ermöglichen.

Die Markierung der Position wird dabei bevorzugt unmittelbar in der Darstellung eines Teils der Simulationsumgebung vorgenommen. Dies bedeutet, dass ggf. über eine entsprechende Eingabe eines Benutzers eine Markierung in der Darstellung der Simulationsumgebung erzeugt und verändert werden kann, wobei die Position der zumindest einen Markierung in Bezug auf die Darstellung der Simulationsumgebung ermittelbar oder feststellbar ist.

Weiter kann besonders vorteilhaft vorgesehen sein, dass anhand der markierten Position und/oder anhand der markierten Fläche und/oder Volumen in der Darstellung der Simulationsumgebung eine entsprechende Zielposition und/oder Zielausdehnung in der Realumgebung ermittelt und an eine Feuerleiteinrichtung weitergeleitet wird. Dabei kann, wie oben bereits angedeutet, in besonders vorteilhafter Weise die Georeferenzierung der Simulationsdatenbasis zum Einsatz kommen, die es erlaubt, dass anhand einer oder mehrerer Markierung in einer Darstellung der Simulationsumgebung oder eines Teils der Simulationsumgebung auf eine Position, eine Fläche oder ein Volumen in der Realumgebung zurückgeschlossen wird, wobei dies mit einer Genauigkeit von wenigen Zentimetern pro Raumrichtung und unter weitestgehender Vermeidung von Auslese- oder Ablese- und/oder Umrechnungs- sowie Übertragungsfehlern erfolgen kann.

Eine weitere bevorzugte Ausgestaltung des Verfahrens sieht weiter vor, dass die Identifizierung einer entsprechenden Zielposition und/oder Zielausdehnung in der Realumgebung und die Weiterleitung an die Feuerleiteinrichtung automatisch durchgeführt werden. Dadurch können weitere Fehlerquellen sowie die oben bereits genannten Fehlerquellen eliminiert werden und die Präzision der Identifikation der Zielposition und Zielausdehnung weiter verbessert werden.

Beispielswiese kann nach einer Definition von einer oder mehreren Markierungen in der Simulationsumgebung und gegebenenfalls nach einem Verifikationsschritt eine automatische Berechnung der Zielposition/Zielausdehnung im entsprechenden Koordinatensystem der Realumgebung aus der oder den Markierungen und der Georeferenzierung des Simulationsdatenbasis oder Simulationsumgebung erfolgen. Im Anschluss daran kann beispielsweise eine automatische Übermittlung der Zielposition/Zielausdehnung stattfinden. An dieser Stelle sei auch erwähnt, dass eine Übermittlung der markierten Position oder Positionen der Simulationsumgebung erfolgen kann und erst im Anschluss daran seitens der Feuerleiteinrichtung die Umrechnung in eine Zielposition/Zielausdehnung der Realumgebung erfolgen kann. Dies kann aus Gründen der Verschlüsselung der Übertragung vorteilhaft sein. Aber auch bei dieser Reihenfolge kann eine automatische Durchführung erfolgen.

Weiter kann besonders vorteilhaft vorgesehen sein, dass die Simulationsdatenbasis, insbesondere die Simulationsumgebung der Simulationsdatenbasis zumindest eine Mehrzahl klassifizierter Objektmodelle umfasst, welche realabbildende Modelle von Objekten der Realumgebung darstellen, wobei zumindest ein Teil der Objektmodelle gemäß einer Objektklassifizierung klassifiziert sind und insbesondere während der Darstellung der Simulationsumgebung Objekte zumindest einer Objektklasse hervorgehoben dargestellt werden können.

Als entsprechende Objekte und Objektmodelle kommen beispielsweise Gebäude, Pflanzen, insbesondere Bäume, Bauwerke, insbesondere Straßen und Brücken und dergleichen in Betracht. Die Hervorhebung von entsprechend klassifizierten Objekten und deren Modelle im Rahmen der Darstellung der Simulationsumgebung kann die eindeutige und zuverlässige Identifizierung einer Zielposition und/oder Zielausdehnung erleichtern. Beispielsweise können in der Darstellung der Simulationsumgebung alleinstehende Bäume oder Gebäude hervorgehoben dargestellt werden, um dem Benutzer die Orientierung in der Simulationsumgebung und damit die Identifizierung einer Zielposition oder Zielausdehnung in der Darstellung der Simulationsumgebung erleichtern.

Die hervorgehobene Darstellung kann dabei in grundsätzlich unterschiedlicher Art und Weise erfolgen. Beispielsweise können die Objekte oder Objektmodelle in einer auffälligen, unnatürlichen Falsch- oder Fehlfarbe dargestellt werden. Alternativ oder zusätzlich kann die Darstellung der Objekte mit einem Halo-Effekt versehen werden, der ein Leuchten oder Strahlen der Objekte oder Objektmodelle in der Darstellung der Simulationsumgebung suggeriert.

In einer ebenfalls bevorzugten Ausführungsform des Verfahrens kann zudem vorgesehen sein, dass die Simulationsdatenbasis, insbesondere die Simulationsumgebung ein Geländemodell umfasst, welches das reale Gelände geospezifisch abbildet, wobei zumindest Teile des Geländemodells, gemäß einer Geländeklassifikation, klassifiziert sind und insbesondere während der Darstellung der Simulationsumgebung Geländeteile, zumindest einer Geländeklasse, hervorgehoben dargestellt werden können.

Wie auch bei der hervorgehobenen Darstellung von klassifizierten Objekten oder Objektmodellen können die hervorgehobenen Darstellungen von klassifizierten Teilen des Geländemodells die korrekte, zuverlässige und genaue Bestimmung der Zielposition und/oder Zielausdehnung erleichtern. Als Geländeklassen kommen beispielsweise unterschiedliche Arten von Untergrund, wie beispielsweise asphaltiert, bewachsen, bebaut oder Wasseroberfläche in Betracht. Alternativ oder zusätzlich kann das Geländemodell auch gemäß des Höhenverlaufs des Geländemodells klassifiziert sein, wodurch sich beispielsweise markante Steigungen oder Anhöhen identifizieren, klassifizieren und dementsprechend im Rahmen der Darstellung der Simulationsumgebung hervorheben lassen.

Gemäß einer ebenfalls bevorzugten Ausgestaltung des Verfahrens kann zudem vorgesehen sein, dass zur Ermittlung eines Munitionstyps und/oder eines Munitionsbedarfs zur Bekämpfung eines Ziels die Simulationsumgebung der Simulationsdatenbasis, insbesondere die Geländeklassifikation und/oder die Objektklassifikation, in der Umgebung der bestimmten Position, Fläche und/oder Volumen des zu bekämpfenden Ziels ausgewertet wird. Dadurch wird in besonders vorteilhafter Weise erreicht, dass nicht nur die Präzision der Feuerleitlösung aufgrund einer verbesserten Bestimmung der Zielposition und/oder Ausdehnung erhöht wird, sondern auch, dass die zur Bekämpfung des Ziels verwendete Munition und die Anzahl der zur Bekämpfung eingesetzten Geschosse optimiert, ggf. automatisch optimiert wird, um einerseits eine wirksame Bekämpfung des Ziels zu gewährleisten und andererseits die Gefahr von Kollateralschäden weiter zu verringern und darüber hinaus die Kampfmittellasten durch nicht detonierte Kampfmittel und/oder explosive Kampfmittelrückstände (UXO) zu minimieren.

Denn beispielsweise kann bei einer Bestimmung einer Zielposition und/oder Zielausdehnung in der Nähe oder angrenzend an eine Wasseroberfläche eine oben beschriebene Munitionsbedarfsanalyse basierend auf den Informationen der Simulationsumgebung ausgeführt werden, die dazu führt, dass im Bereich oder in der Nähe der Wasseroberfläche keine Munition verwendet wird, die beim Auftreffen auf die Wasseroberfläche nicht oder nur unzuverlässig gezündet werden würde. Andererseits kann bei einer Bestimmung einer Zielposition in der Nähe eines dicht bebauten oder dicht besiedelten Gebietes eine Munitionsbedarfsanalyse auf Grundlage der Informationen der Simulationsdatenbasis und deren Simulationsumgebung durchgeführt werden, die die bestimmte Zielposition oder die bestimmte Zielausdehnung derart verändert oder beschränkt, dass ein Beschuss des dicht bebauten oder dicht besiedelten Gebietes mit höchst möglicher Wahrscheinlichkeit vermieden wird.

Die oben genannte Aufgabe wird bei einer Vorrichtung zur Ermittlung zumindest einer Zielposition und zur Übermittlung der Zielposition an eine Feuerleiteinrichtung zur Ermittlung einer Feuerleitlösung dadurch g e - l ö s t , dass die Vorrichtung eine georeferenzierte Simulationsdatenbasis umfasst, welche eine eine Realumgebung geospezifisch abbildende Simulationsumgebung aufweist und darüber hinaus Mittel zur Markierung zumindest einer Position der Simulationsumgebung und Übermittlung der markierten Position an die Feuerleiteinrichtung aufweist.

Dadurch können mit Hilfe der Simulationsdatenbasis und unter Benutzung ihrer hochauflösenden, hochgradig realitätsnahen und darüber hinaus georeferenzierten Simulationsumgebung eine Vielzahl der Fehlerquellen ausgeschaltet oder minimiert werden, welche bei bekannten Verfahren zur Ermittlung einer Feuerleitlösung auftreten. Beispielsweise kann die Zielposition besonders genau und mit hoher Sicherheit identifiziert und darüber hinaus fehlerfrei abgelesen oder an die Feuerleiteinrichtung übermittelt werden.

Allgemein werden im Zusammenhang mit der erfindungsgemäßen Vorrichtung sowie auch mit den nachfolgend beschriebenen Ausführungsformen der Vorrichtung dieselben Vorteile erreicht, wie mit dem vorangehend beschriebenen erfindungsgemäßen Verfahren und dessen Ausführungsform. Insoweit kann bezüglich der vorteilhaften Wirkungen der Vorrichtungsmerkmale in vielerlei Hinsicht auf die vorangehende Beschreibung des Verfahrens verwiesen werden.

Gemäß einer ersten Ausführungsform der Vorrichtung kann vorteilhaft vorgesehen sein, dass diese Mittel zur Markierung einer Fläche und/oder eines Volumens der Simulationsumgebung und zur Übermittlung der markierten Fläche und/oder des markierten Volumens an die Feuerleiteinrichtung umfasst. Dadurch kann neben einer genauen Definition einer Zielposition eine genaue Definition einer Zielausdehnung vorgenommen werden.

Weiter kann vorteilhaft vorgesehen sein, dass die Mittel zur Markierung einer Position, einer Fläche und/oder eines Volumens der Simulationsumgebung eine Anzeigeeinheit umfassen, welche zur Anzeige von zumindest einem Teil der Simulationsumgebung eingerichtet ist. Dadurch kann in besonders vorteilhafter Weise die besonders hohe Realitätsnähe einer geospezifischen und georeferenzierten Simulationsumgebung zur zuverlässigen Bestimmung einer korrekten Markierung in der Simulationsumgebung verwendet werden, was zu einer genaueren Bestimmung der Zielposition in der Realumgebung führt.

Eine weitere bevorzugte Ausgestaltung der Vorrichtung sieht vor, dass die Anzeigeeinheit zur Darstellung zumindest als Teil der Simulationsumgebung in Form einer Kartendarstellung eingerichtet ist. Die Anzeigeeinheit kann dabei beispielsweise als Flachbildschirm ausgebildet sein und somit als digitale Karte auch mobil verwendet werden.

Ebenfalls kann vorteilhaft vorgesehen sein, dass die Anzeigeeinheit so eingerichtet ist, dass die Darstellung von zumindest einem Teil der Simulationsumgebung mit einer Abbildung eines entsprechenden Teils der Realumgebung überlagert angezeigt wird. Dadurch kann ermöglicht werden, dass der Benutzer einerseits das zu bekämpfende Ziel und dessen Position, nämlich über die Darstellung eines Teils der Realumgebung, wahrnehmen kann und gleichzeitig, nämlich über die Darstellung eines Teils der Simulationsumgebung, eine hochpräzise Bestimmung der Zielposition des zu bekämpfenden Ziels, beispielsweise mittels einer Markierung der Simulationsumgebung mit einer der Vorrichtung vornehmen kann.

In einer weiteren besonders vorteilhaften Ausführungsform der Vorrichtung ist eine Eingabeschnittstelle zur Markierung einer Position, einer Fläche oder eines Volumens in der Darstellung von zumindest einem Teil der Simulationsumgebung vorgesehen. Beispielsweise kann die Eingabeschnittstelle als berührungsempfindliche Schnittstelle eines Flachbildschirms also als sogenannter "Touchscreen" ausgebildet sein. Aber auch alternative Eingabeschnittstellen, wie beispielsweise ein Joystick, ein Touchpad, ein Tracking Ball oder dergleichen können als Eingabeschnittstelle Verwendung finden. Damit wird ermöglicht, dass über die Eingabeschnittstelle eine Markierung einer Position, einer Fläche und/oder eines Volumens in der Darstellung der Simulationsumgebung der Simulationsdatenbasis vorgenommen werden kann, wobei anhand der Position, der Fläche oder des Volumens eine Zielposition und/oder eine Zielausdehnung des zu bekämpfenden Ziels in der Realumgebung über die Georeferenzierung der Simulationsdatenbasis abgeleitet wird.

Zudem kann vorteilhaft vorgesehen sein, dass die Vorrichtung eine Recheneinheit umfasst, wobei die Recheneinheit zur Ermittlung einer Zielposition und/oder einer Zielausdehnung eines zu bekämpfenden Ziels in der Realumgebung in Abhängigkeit der zumindest einen Markierung in der Simulationsumgebung, insbesondere in der Darstellung der Simulationsumgebung eingerichtet ist. Dies bedeutet, dass die Recheneinheit eine Transformation oder Rücktransformation vornimmt, die aus einer Markierung in der Simulationsumgebung eine Orts- oder Raumkoordinate der Realumgebung ermittelt und diese an die Feuerleiteinrichtung weiterleitet. Dadurch werden Ablese- oder Übertragungsfehler der Zielposition und/oder der Zielausdehnung weitestgehend vermieden.

Gemäß einer weiteren vorteilhaften Ausgestaltung der Vorrichtung kann vorgesehen sein, dass die Simulationsdatenbasis, insbesondere die Simulationsumgebung zumindest eine Mehrzahl klassifizierter Objektmodelle umfasst, welche realabbildende Modelle von Objekten der Realumgebung darstellen, wobei zumindest ein Teil der Objektmodelle gemäß einer Objektklassifizierung klassifiziert sind. Dadurch kann erreicht werden, dass im Rahmen der Darstellung eines Teils der Simulationsumgebung klassifizierte Objekte in einer besonderen, insbesondere in einer hervorgehobenen Art und Weise dargestellt werden, was wiederum die eindeutige und zuverlässige Identifizierung und Bestimmung der Zielposition und/oder Zielausdehnung des zu bekämpfenden Ziels durch einen Benutzer erleichtert.

Zusätzlich oder alternativ kann vorteilhaft vorgesehen sein, dass die Simulationsdatenbasis, insbesondere die Simulationsumgebung zumindest ein Geländemodell umfasst, welches einen realen Geländeverlauf geospezifisch abbildet, wobei zumindest Teile des Geländemodells gemäß einer Geländeklassifikation klassifiziert sind. Auch dadurch wird, insbesondere im Rahmen der Darstellung der Simulationsumgebung, die eindeutige, zuverlässige und korrekte Bestimmung der Zielposition und/oder Zielausdehnung verbessert, wodurch insgesamt eine präzisere Feuerleitlösung erstellt und eine effektivere Bekämpfung des Ziels gewährleistet werden kann.

Weitere Einzelheiten und Vorteile der Erfindung werden nachfolgend anhand der in den Zeichnungen schematisch dargestellten Ausführungsbeispiele erläutert. Darin zeigen:
- Fig. 1: eine schematische Darstellung einer beispielshaften Situation in der die Ermittlung einer Feuerleitlösung notwendig ist;
- Fig. 2: eine schematische Darstellung einer erfindungsgemäßen Vorrichtung gemäß einer ersten Ausführungsform;
- Fig. 3: ein Ablaufdiagramm des erfindungsgemäßen Verfahrens gemäß einer ersten Ausführungsform;
- Fig. 4: ein Ablaufdiagramm eines erfindungsgemäßen Verfahrens gemäß einer zweiten Ausführungsform.

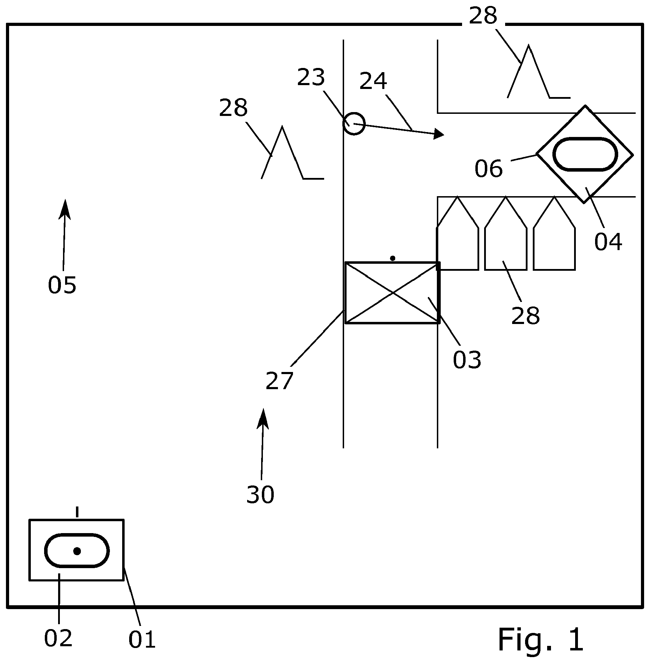

Die Fig. 1 zeigt beispielhaft eine Situation eines militärischen Einsatzes, in dem die Ermittlung einer Feuerleitlösung möglichst fehlerfrei und präzise durchgeführt werden soll.

In der Ausgangssituation der Fig. 1 ist ein Waffensystem 01 dargestellt, welches über eine Feuerleiteinrichtung 02 verfügt. Beispielsweise soll es sich bei dem Waffensystem 01 um ein Panzerhaubitzen-System handeln. Das Waffensystem 01 soll dabei eine Unterstützungsfunktion für weitere militärische Einheiten bilden. Die Unterstützungsfunktion soll beispielsweise auch dem Infanterietrupp 03 zukommen, der sich von dem Waffensystem 01 entfernt befindet. Im Beispiel der Fig. 1 kann angenommen werden, dass der Infanterietrupp 03 sich auf Patrouille befindet oder eine Aufklärungsmission durchführt. In diesem Zusammenhang sei darauf hingewiesen, dass die Entfernungen und Abmessungen in der Darstellung der Fig. 1 keinesfalls maßstabsgetreu sind. Vielmehr soll angenommen werden, dass sich der Infanterietrupp 03 in einem Abstand von mehreren Kilometern vom Waffensystem 01, jedoch noch innerhalb der Reichweite des Waffensystems 01 befindet.

Nunmehr soll davon ausgegangen werden, dass der Infanterietrupp 03 im Rahmen seiner Mission einen mittelbaren oder unmittelbaren Sichtkontakt zu einem zu bekämpfenden Ziel 04 herstellt, welches sich wie auch das Waffensystem 01 und der Infanterietrupp 03 in der Realumgebung 05 befindet. Sollte der Infanterietrupp 03 im weiteren Verlauf seiner Mission von dem zu bekämpfenden Ziel 04 bedroht oder angegriffen werden, kann es, insbesondere abhängig von der Art des zu bekämpfenden Ziels 04, sinnvoll sein, dass die Bekämpfung nicht durch den Infanterietrupp 03, sondern durch das Waffensystem 01 erfolgt, welches somit seiner Unterstützungsfunktion für den Infanterietrupp 03 nachkommt. In diesem Fall ist es jedoch zur präzisen und effektiven Bekämpfung des Ziels 04 eminent wichtig, dass die Zielposition 06 des zu bekämpfenden Ziels 04 in der Realumgebung 05 korrekt und möglichst fehlerfrei identifiziert wird.

Gemäß des Standes der Technik wäre es zur Bestimmung der Zielposition 06 des zu bekämpfenden Ziels 04 einerseits möglich, dass der Infanterietrupp 03 zunächst seine eigene Position 27 mittels entsprechender Positionsbestimmungseinrichtungen bestimmt, anschließend Richtung und Entfernung zur Zielposition 06 des zu bekämpfenden Ziels 04 ebenfalls mit entsprechenden Einrichtungen bestimmt und anschließend diese Information und/oder eine daraus abgeleitete Zielposition 06 an das Waffensystem 01 und dessen Feuerleiteinrichtung 02 übermittelt, beispielsweise per Sprechfunk.

Alternativ könnte der Infanterietrupp 03 auch anhand einer Geländekarte die Zielposition 06 des zu bekämpfenden Ziels 04 zu ermitteln versuchen und anschließend ebenfalls die Zielposition 06 an die Feuerleiteinrichtung 02 übermitteln. In beiden Verfahren nach dem Stand der Technik ergeben sich jedoch eine Vielzahl von Fehlerquellen, welche zusammen mit der entsprechenden Fehlerfortpflanzung im Rahmen der Ermittlung der Feuerleitlösung und ggf. weiteren Fehlern zu einer Feuerleitlösung mit einer zu geringen Präzision führen kann, was wiederum dazu führen kann, dass der Infanterietrupp 03 ggf. selbst durch den Beschuss seitens des Waffensystems 01 gefährdet wird.

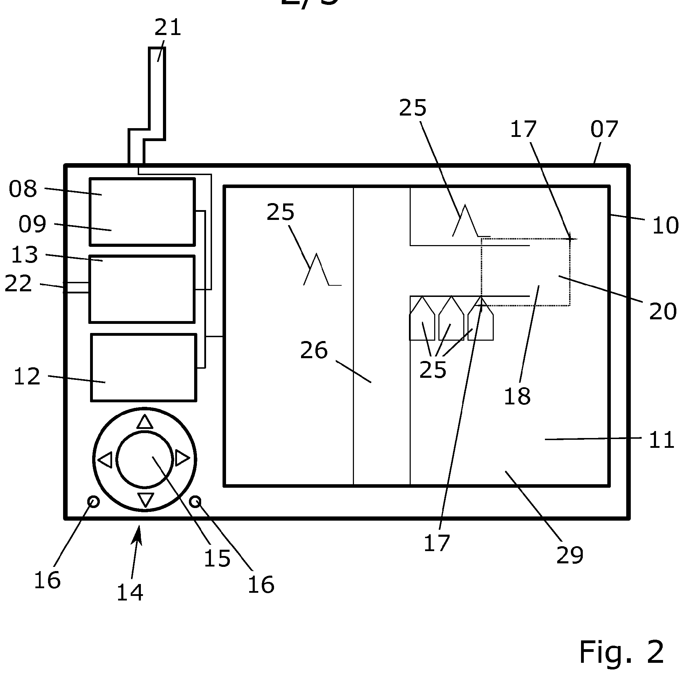

Wie anhand der erfindungsgemäßen Vorrichtung sowie des erfindungsgemäßen Verfahrens eine Ermittlung einer präzisierten Feuerleitlösung stattfinden kann, wird nachfolgend auch unter Bezugnahme auf die Fig. 2 bis 4 beschrieben.

Beispielsweise kann vorgesehen sein, dass der Infanterietrupp 03 die in der Fig. 2 schematisch darstellte, erfindungsgemäße Vorrichtung 07 zur Ermittlung zumindest einer Zielposition 06 und zur Übermittlung der Zielposition 06 an die Feuerleiteinrichtung 02 zur Ermittlung einer Feuerleitlösung mit sich führt. Bei der Vorrichtung 07 soll es sich gemäß des Beispiels der Fig. 2 um eine tragbare Vorrichtung handeln, die beispielsweise in einem Rucksack oder einer Kampftasche eines Mitglieds des Infanterietrupps 03 transportiert werden kann. Die Vorrichtung 07 kann dabei noch weitere Funktionalitäten umfassen. Beispielsweise kann sie als Kommunikationsvorrichtung ausgestattet sein.

Die Vorrichtung 07 umfasst dabei eine Speichereinrichtung 08, in der zumindest ein Teil einer georeferenzierten Simulationsdatenbasis 09 in digitaler Form gespeichert ist. Außerdem umfasst die Vorrichtung 07 eine Anzeigeeinheit 10, die zur Darstellung von zumindest einem Teil einer die Realumgebung 05 geospezifisch abbildenden Simulationsumgebung 11 eingerichtet ist. Außerdem weist die Vorrichtung 07 eine Recheneinheit 12 auf, welche einerseits mit der Speichereinrichtung 08 und andererseits mit einer Darstellungseinheit 13 verbunden ist.

Die Recheneinheit 12 kann dabei als programmierbarer integrierter Schaltkreis (IC) in der Form einer zentralen Recheneinheit (CPU) ausgeführt sein. Die Darstellungseinheit 13 kann ebenfalls entsprechende integrierte Schaltkreise aufweisen und programmierbar sein. Gegebenenfalls kann die Darstellungseinheit 13 über zumindest eine weitere digitale Speichereinrichtung 08, wie beispielsweise über einen Grafik- oder Darstellungsspeicher, verfügen, der speziell zur Zwischenspeicherung von Daten der Simulationsumgebung 11 zum Zweck der Anzeige der Simulationsumgebung 11 eingerichtet ist. Die Recheneinheit 12, insbesondere in Verbindung mit der Darstellungseinheit 13, dienen zur Darstellung von zumindest einem Teil der Simulationsumgebung 11 auf der Anzeigeeinheit 10 der Vorrichtung 07. Dazu werden die in der Speichereinrichtung 08 vorgehaltenen Daten der Simulationsdatenbasis 09 von der Recheneinheit 12 und der Darstellungseinheit 13 ausgelesen, verarbeitet und mit der Anzeigeeinheit 10 ausgegeben.

Wie in der Fig. 2 skizziert ist die Anzeigeeinheit 10 dazu eingerichtet, Teile der Simulationsumgebung 11 in einer Kartendarstellung darzustellen. Die Vorrichtung 07 umfasst weiter eine Eingabeschnittstelle 14, welche beispielsweise als Joystick 15 und Taster 16 ausgebildet sind. Mit der Eingabeschnittstelle 14 können u. a. die auf der Anzeige der Anzeigeeinheit 10 erzeugten Mittel 17 zur Markierung einer Position und/oder einer Fläche der Simulationsumgebung 11 gesteuert oder beeinflusst werden. Bei den Mitteln 17 zur Markierung einer Position und/oder Fläche in der Simulationsumgebung 11 handelt es sich im Beispiel der Fig. 2 um zwei Kreuze, welche je nach Position zueinander eine Fläche 18 in der Simulationsumgebung 11 markieren. Soweit die Mittel 17 übereinander liegen oder eines der Mittel 17 aus der Anzeige der Anzeigeeinheit 10 entfernt wird, wird stattdessen eine Position 20 in der Darstellung der Simulationsumgebung 11 markiert. Gegebenenfalls können die Mittel 17 ein drittes Kreuz umfassen, sodass ein Volumen in der Darstellung der Simulationsumgebung 11 markiert werden kann.

Der besondere Vorteil bei der Verwendung der Vorrichtung 07 gemäß der Fig. 2 liegt darin, dass die in der Speichereinrichtung 08 vorgehaltene Simulationsdatenbasis 09 einerseits georeferenziert ist und darüber hinaus die von der Simulationsdatenbasis 09 umfasste Simulationsumgebung 11 die Realumgebung 05 geospezifisch abbildet. Außerdem besteht der besondere Vorteil darin, dass die räumliche Auflösung der Simulationsdatenbasis 09 beispielsweise lediglich 5 cm pro Raumrichtung beträgt. Damit kann erreicht werden, dass die Darstellung der Simulationsumgebung 11 mittels der Anzeigeeinheit 10 einerseits ein besonders hohes Maß an Übereinstimmung mit der Realumgebung 05 aufweist, was dem Benutzer der Vorrichtung 07 ermöglicht oder erleichtert, die der Zielposition 06 des zu bekämpfenden Ziels 04 entsprechende Position 20 in der Darstellung der Simulationsumgebung 11 auf der Anzeigeeinheit 10 der Vorrichtung 07 zuverlässig zu identifizieren und über die Eingabeschnittstelle 14 sowie die Mittel 17 zur Markierung zu markieren.

Basierend auf einer solchen Markierung einer Position 20 oder Fläche 18 der Simulationsumgebung 11 kann die Vorrichtung 07, insbesondere die Recheneinheit 12 in Verbindung mit der Speichereinrichtung 08 und der darin vorgehaltenen georeferenzierten Simulationsdatenbasis 09 aufgrund der Georeferenzierung der Simulationsdatenbasis 09 und der hohen Auflösung der Simulationsumgebung 11 anhand der markierten Fläche 18 oder Position 20 auf eine Position oder Koordinaten in der Realumgebung 05 schließen oder zurückrechnen, welche dann die Zielposition 06 des zu bekämpfenden Ziels 04 präzise und weitestgehend fehlerfrei wiedergibt oder wiedergeben.

Außerdem besteht eine weiterer Vorteil der Vorrichtung 07 darin, dass eine Übermittlung der so bestimmten oder generierten Zielposition 06 automatisch über eine Kommunikationsschnittstelle 21, die im Beispiel der Fig. 2 als drahtlose Kommunikationsschnittstelle ausgebildet ist, an eine Feuerleiteinrichtung 02 des Waffensystems 01 übermittelt werden kann, so dass auch Ablese- und/oder Übertragungsfehler hinsichtlich der Zielposition 06 weitestgehend vermieden werden können.

Die Kommunikationsschnittstelle 21 kann zudem bidirektional ausgeführt sein, um nicht nur das Senden von Informationen durch die Vorrichtung 07, sondern auch das Empfangen von Informationen durch die Vorrichtung 07 zu ermöglichen. Beispielsweise können mittels der Kommunikationsschnittstelle 21 bei Bedarf entsprechende Daten oder Teile der georeferenzierten Simulationsdatenbasis 09 an die Speichereinrichtung 08 übertragen oder dort aktualisiert werden.

In der Darstellung der Fig. 2 ist darüber hinaus angedeutet, dass die Darstellungseinheit 13 eine weitere Schnittstelle 22 umfasst. Die Schnittstelle 22 kann beispielsweise vorgesehen sein, um Bildgebungssignale beispielsweise Kamerasignale zu empfangen. Diese Bildsignale oder Kamerasignale können beispielsweise von Robotern oder unbemannten Flugobjekten erzeugt werden, die von dem Infanterietrupp 03 mitgeführt werden und mit entsprechenden Bildgebungssensoren ausgestattet sind. Soweit über die Schnittstelle 22 entsprechende Informationen empfangen und an die Darstellungseinheit 13 weitergegeben werden, kann besonders vorteilhaft vorgesehen sein, dass die Darstellungseinheit 13 dazu eingerichtet ist, eine überlagerte Darstellung der Simulationsumgebung 11 und der über die Schnittstelle 22 empfangenen Abbildungen eines entsprechenden Teils der Realumgebung 05 zu erzeugen. Außerdem kann vorgesehen sein, dass die Anzeigeeinheit 10 dazu eingerichtet ist, die Darstellung der Simulationsumgebung 11 mit einer Abbildung eines entsprechenden Teils der Realumgebung 05 überlagert anzuzeigen. Dadurch wird die präzise und zuverlässige Bestimmung einer Zielposition 06 für eine Feuerleitlösung über die Markierung einer entsprechenden Position 20 oder Fläche 18 in der Darstellung der Simulationsumgebung 11 noch weiter verbessert. Anstelle der Schnittstelle 22 kann auch vorgesehen sein, dass Abbildungen der Realumgebung 05 oder zumindest eines Teils der Realumgebung 05 über die Kommunikationsschnittstelle 21 empfangen werden.

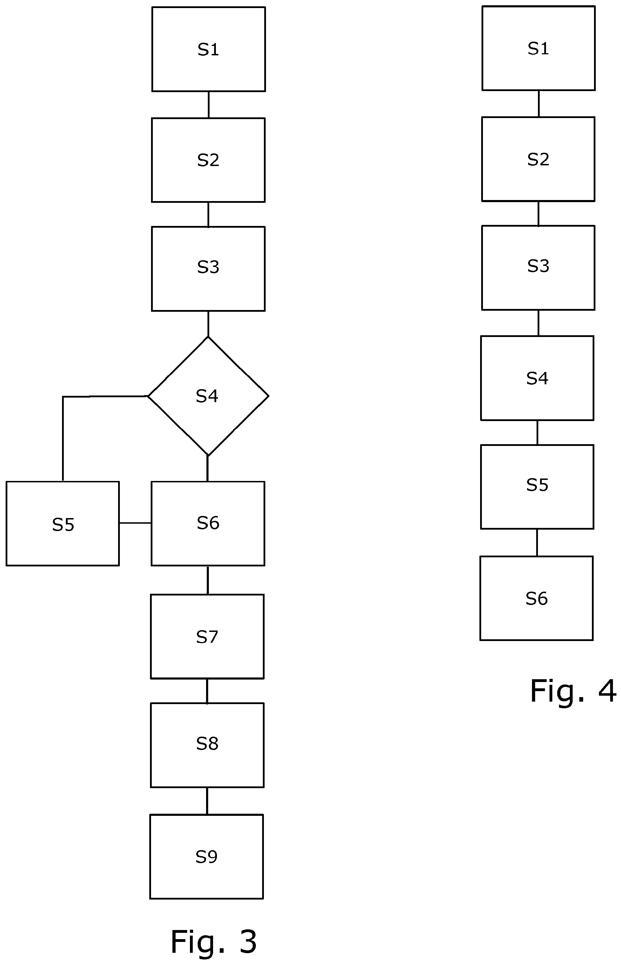

Nachfolgend wird mit Bezug auf die Fig. 3 ein Verfahrensablauf skizziert, der dazu führen soll, dass im Rahmen der Bestimmung der Zielposition 06 eines zu bekämpfenden Ziels 04 sowohl ein Teil der Simulationsumgebung 11 als auch ein Teil der Realumgebung 05 angezeigt wird, wobei die Anzeigen überlagert zueinander dargestellt werden sollen, um so für den Benutzer einen Sinneseindruck einer erweiterten Realität (augmented reality) zu ermöglichen.

Dazu werden in einem ersten Verfahrensschritt S1 die Realposition 23 und die reale Blickrichtung 24 bestimmt, unter denen die Realumgebung 05, insbesondere der Teil der Realumgebung 05, in dem das zu bekämpfende Ziel 04 angeordnet ist, betrachtet wird. Die Betrachtung kann dabei direkt oder unmittelbar durch einen Benutzer erfolgen. Alternativ kann die Betrachtung auch ausgehend von einer weiteren Einrichtung, wie beispielsweise einem unbemannten Flugobjekt oder einem Roboter erfolgen, welcher oder welches sich an der Realposition 23 befindet.

Im Anschluss daran werden in einem Verfahrensschritt S2 zwei Darstellungen oder Abbildungen initiiert. Dabei handelt es sich einerseits um eine Abbildung der Realumgebung 05 sowie eine Darstellung der Simulationsumgebung 11 oder zumindest eines Teils der Simulationsumgebung 11, wobei die Darstellung des Teils der Simulationsumgebung 11 derart generiert wird, dass sie aus einem virtuellen Blickpunkt und entlang einer virtuellen Blickrichtung erfolgt, welche anhand der Realposition 23 und der realen Blickrichtung 24 einer Abbildung der Realumgebung 05 abgeleitet werden.

In dem daran anschließenden Verfahrensschnitt S3 können die Überlagerung der zwei Darstellungen sowie deren Anzeige auf einer Anzeigeeinheit 10 erfolgen.

Daran anschließend kann im Verfahrensschritt S4 geprüft werden, ob ein Hervorheben von einer Objektklasse zugeordneten klassifizierten Objektmodellen 25 und/oder ein Hervorheben von einer Geländeklasse zugeordneten Geländeteilen 26 der Simulationsumgebung 11 im Rahmen der Darstellung der Simulationsumgebung 11 erfolgen soll, um die korrekte und präzise Markierung einer Position 20 und/oder Fläche 18 der Simulationsumgebung 11 zur Ableitung einer Zielposition 06 und/oder Zielausdehnung des zu bekämpfenden Ziels 04 in der Realumgebung 05 zu verbessern. Bei den klassifizierten Objektmodellen 25 kann es sich beispielsweise um Gebäude oder charakteristische Vegetation handeln. Bei den klassifizierten Geländeteilen 26 kann es sich beispielsweise um Straßen, insbesondere asphaltierte Straßen, handeln. Soweit eine entsprechende Hervorhebung gewünscht ist, wird im Verfahrensschritt S5 die Darstellung der Simulationsumgebung 11 entsprechend angepasst. Wenn eine Anpassung der Darstellung der Simulationsumgebung 11 nicht gewünscht ist, wird das Verfahren mit dem Verfahrensschritt S6 fortgesetzt.

Im Verfahrensschnitt S6 kann die Markierung einer Position 20, Fläche 18 oder eines Volumens der Simulationsumgebung 11 erfolgen. Dazu kann eine Eingabe durch einen Benutzer vorgesehen sein.

Im Verfahrensschritt S7 wird aus der markierten Position 20, Fläche 18 oder Volumen eine Zielposition 06 in der Realumgebung 05 sowie ggf. eine Zielausdehnung des zu bekämpfenden Ziels 04 bestimmt, indem über die Georeferenzierung der Simulationsdatenbasis 09 die Position 20, Fläche 18 oder das Volumen, welches in der Simulationsumgebung 11 markiert wurde, in eine entsprechende Koordinate oder in entsprechenden Koordinaten der Realumgebung 05 umgewandelt oder zurückgerechnet wird.

Im anschließenden Verfahrensschritt S8 erfolgt die Übermittlung der Zielposition 06 und ggf. der Zielausdehnung an eine Feuerleiteinrichtung 02.

Im abschließenden Verfahrensschritt S9 kann unter anderem basierend auf der übermittelten Zielposition 06 eine Feuerleitlösung und deren Details oder Parameter bestimmt werden.

Mit Bezug auf Fig. 4 soll nunmehr eine alternative Ausgestaltung eines erfindungsgemäßen Verfahrens beschrieben werden. Dabei kann vorgesehen sein, dass die Darstellung von zumindest einem Teil der Simulationsumgebung 11 in Form einer Kartendarstellung erfolgt, wie es beispielsweise in der Fig. 2 skizziert ist. In dem Verfahrensschritt S1 des Verfahrens der Fig. 4 erfolgt abermals eine Initialisierung der Darstellung der Simulationsumgebung 11 in Form einer Kartendarstellung. Im anschließenden Verfahrensschritt S2 kann eine jeweils unterschiedlich ausfallende Manipulation der Darstellung der Simulationsumgebung 11 erfolgen. Beispielsweise kann der dargestellte Teil der Simulationsumgebung 11 verändert werden. Ebenfalls kann der Maßstab und damit die Auflösung der Kartendarstellung der Simulationsumgebung 11 verändert, insbesondere stufenlos verändert werden. Auch die mit Bezug auf die Fig. 3 und den dortigen Verfahrensschritten S4 und S5 beschriebenen Manipulationen der Darstellung der Simulationsumgebung 11 können im Fall einer Darstellung als Karte im Verfahrensschritt S2 der Fig. 4 durchgeführt werden.

Die Verfahrensschritte S3 bis S6 der Fig. 4 entsprechen weitestgehend den Verfahrensschritten S6 bis S9 der Fig. 3 mit dem Unterschied, dass entweder im Verfahrensschritt S4, bei dem die Zielposition 06 oder die Zielausdehnung des zu bekämpfenden Ziels 04 bestimmt wird oder im Rahmen des Verfahrensschritts S6, in dem die Feuerleitlösung und deren Parameter oder Details bestimmt wird, eine Munitionsbedarfsanalyse durchgeführt wird, welche zur Ermittlung eines Munitionstyps und/oder eines Munitionsbedarfs dient und bei der die Simulationsumgebung 11 der Simulationsdatenbasis 09, insbesondere die Geländeklassifikation und/oder die Objektklassifikation in der Umgebung der Zielposition 06 des zu bekämpfenden Ziels 04 ausgewertet wird, um einerseits eine effektive Bekämpfung des Ziels 04 zu ermöglichen und andererseits Kollateralschäden möglichst zu vermeiden.

### Bezugszeichen:

- 01: Waffensystem
- 02: Feuerleiteinrichtung
- 03: Infanterietrupp
- 04: Ziel
- 05: Realumgebung
- 06: Zielposition
- 07: Vorrichtung
- 08: Speichereinrichtung
- 09: Simulationsdatenbasis
- 10: Anzeigeeinheit
- 11: Simulationsumgebung
- 12: Recheneinheit
- 13: Darstellungseinheit
- 14: Eingabeschnittstelle
- 15: Joystick
- 16: Taster
- 17: Mittel
- 18: Fläche
- 20: Position
- 21: Kommunikationsschnittstelle
- 22: Schnittstelle
- 23: Realposition
- 24: Blickrichtung
- 25: Objektmodell
- 26: Geländeteile/ Teile des Geländemodells
- 27: eigene Position
- 28: Objekt
- 29: Geländemodell
- 30: reales Gelände

## Patentansprüche

1. Verfahren zur Ermittlung einer Feuerleitlösung, umfassend die Ermittlung einer Zielposition (06) und die Übermittlung der Zielposition (06) an eine Feuerleiteinrichtung (02),
**dadurch gekennzeichnet,**
**dass** die Zielposition (06) eines zu bekämpfenden Ziels (04) in einer Realumgebung (05) mit einer georeferenzierten Simulationsdatenbasis (09), welche eine die Realumgebung (05) geospezifisch abbildende Simulationsumgebung (11) umfasst, bestimmt wird.

2. Verfahren nach Anspruch 1,
**dadurch gekennzeichnet,**
**dass** zumindest eine Zielposition (06) und eine Zielausdehnung mittels der Simulationsdatenbasis (09) bestimmt wird.

3. Verfahren nach Anspruch 1 oder 2,
**dadurch gekennzeichnet,**
**dass** zur Bestimmung der Zielposition (06) und/oder Zielausdehnung eines zu bekämpfenden Ziels (04) zumindest ein Teil der Simulationsumgebung (11) dargestellt wird.

4. Verfahren nach Anspruch 3,
**dadurch gekennzeichnet,**
**dass** die Darstellung der Simulationsumgebung (11) in Form einer Kartendarstellung erfolgt.

5. Verfahren nach Anspruch 3 oder 4,
**dadurch gekennzeichnet,**
**dass** zur Bestimmung der Zielposition (06) und/oder Zielausdehnung eines zu bekämpfenden Ziels (04) zumindest ein Teil der Simulationsumgebung (11) überlagert zu einem entsprechenden Teil der Realumgebung (05) dargestellt wird.

6. Verfahren nach einem der Ansprüche 3 bis 5,
**dadurch gekennzeichnet,**
**dass** die Darstellung der Simulationsumgebung (11) aus einem virtuellen Blickpunkt und entlang einer virtuellen Blickrichtung erfolgt, welche anhand einer Realposition (23) und einer realen Blickrichtung (24) einer Abbildung der Realumgebung (05) abgeleitet werden.

7. Verfahren nach einem der Ansprüche 3 bis 6,
**dadurch gekennzeichnet,**
**dass** die Bestimmung der Zielposition (06) und/oder Zielausdehnung eines zu bekämpfenden Ziels (04) mittels zumindest einer Markierung einer Position (20) und/oder Fläche (18) in der Darstellung der Simulationsumgebung (11) erfolgt.

8. Verfahren nach einem der Ansprüche 3 bis 7,
**dadurch gekennzeichnet,**
**dass** anhand der markierten Position (20) und/oder einer markierten Fläche (18) der Simulationsumgebung (11) eine entsprechende Zielposition (06) und/oder Zielausdehnung in der Realumgebung (05) ermittelt wird und an eine Feuerleiteinrichtung (02) weitergeleitet wird.

9. Verfahren nach einem der Ansprüche 1 bis 8,
**dadurch gekennzeichnet,**
**dass** die Bestimmung der entsprechenden Zielposition (06) und/oder Zielausdehnung in der Realumgebung (05) und die Weiterleitung an die Feuerleiteinrichtung (02) automatisch durchgeführt werden.

10. Verfahren nach einem der Ansprüche 3 bis 9,
**dadurch gekennzeichnet,**
**dass** die Simulationsdatenbasis (09), insbesondere die Simulationsumgebung (11), zumindest eine Mehrzahl klassifizierter Objektmodelle (25) umfasst, welche realabbildende Modelle von Objekten (28) der Realumgebung (05) darstellen, wobei zumindest ein Teil der Objektmodelle (25) gemäß einer Objektklassifizierung klassifiziert sind und insbesondere während der Darstellung der Simulationsumgebung (11) Objekte (28) zumindest einer Objektklasse hervorgehoben dargestellt werden können.

11. Verfahren nach einem der Ansprüche 3 bis 10,
**dadurch gekennzeichnet,**
**dass** die Simulationsdatenbasis (09), insbesondere die Simulationsumgebung (11), ein Geländemodell (29) umfasst, welches das reale Gelände (30) geospezifisch abbildet, wobei zumindest Teile (26) des Geländemodells (29) gemäß einer Geländeklassifikation klassifiziert sind und insbesondere während der Darstellung der Simulationsumgebung (11) Geländeteile (26) zumindest einer Geländeklasse hervorgehoben dargestellt werden können.

12. Verfahren nach einem der Ansprüche 7 bis 11,
**dadurch gekennzeichnet,**
**dass** zur Ermittlung eines Munitionstyps und/oder Munitionsbedarfs die Simulationsumgebung (11) der Simulationsdatenbasis (09), insbesondere die Geländeklassifikation und/oder Objektklassifikation, in der Umgebung der bestimmten Position (20) und/oder Fläche (18) ausgewertet wird.

13. Vorrichtung zur Ermittlung zumindest einer Zielposition (06) und zur Übermittlung der Zielposition (06) an eine Feuerleiteinrichtung (02) zur Ermittlung einer Feuerleitlösung,
**gekennzeichnet durch**
eine georeferenzierte Simulationsdatenbasis (09), welche eine eine Realumgebung (05) geospezifisch abbildende Simulationsumgebung (11) umfasst, und Mittel (17) zur Markierung zumindest einer Position (20) der Simulationsumgebung (11) und Übermittlung der markierten Position (20) an die Feuerleiteinrichtung (02).

14. Vorrichtung nach Anspruch 13,
**gekennzeichnet durch**
Mittel (17) zur Markierung einer Fläche (18) der Simulationsumgebung (11) und zur Übermittlung der markierten Fläche (18) an die Feuerleiteinrichtung (02).

15. Vorrichtung nach Anspruch 14,
**dadurch gekennzeichnet,**
**dass** die Mittel (17) zur Markierung einer Position (20) und/oder Fläche (18) der Simulationsumgebung (11) eine Anzeigeeinheit (10) umfassen, welche zur Anzeige von zumindest einem Teil der Simulationsumgebung (11) eingerichtet ist.

16. Vorrichtung nach Anspruch 15,
**dadurch gekennzeichnet,**
**dass** die Anzeigeeinheit (10) zur Darstellung der Simulationsumgebung (11) in Form einer Kartendarstellung eingerichtet ist.

17. Vorrichtung nach Anspruch 15 oder 16,
**dadurch gekennzeichnet,**
**dass** die Anzeigeeinheit (10) dazu eingerichtet ist, die Darstellung der Simulationsumgebung (11) mit einer Abbildung eines entsprechenden Teils der Realumgebung (05) überlagert anzuzeigen.

18. Vorrichtung nach einem der Ansprüche 13 bis 17,
**gekennzeichnet durch**,
eine Eingabeschnittstelle (14) zur Markierung einer Position (20) und/oder Fläche (18) in der Darstellung der Simulationsumgebung (11).

19. Vorrichtung nach einem der Ansprüche 13 bis 18,
**gekennzeichnet durch**
eine Recheneinheit (12) zur Ermittlung einer Zielposition (06) und/oder einer Zielausdehnung eines zu bekämpfenden Ziels (04) in der Realumgebung (05) anhand der Markierung einer Position (20) und/oder der Markierung einer Fläche (18) in der Simulationsumgebung (11), insbesondere in der Darstellung der Simulationsumgebung (11).

20. Vorrichtung nach einem der Ansprüche 13 bis 19,
**dadurch gekennzeichnet,**
**dass** die Simulationsdatenbasis (09), insbesondere die Simulationsumgebung (11), zumindest eine Mehrzahl klassifizierter Objektmodelle (25) umfasst, welche realabbildende Modelle von Objekten (28) der Realumgebung (05) darstellen, wobei zumindest ein Teil der Objektmodelle (25) gemäß einer Objektklassifizierung klassifiziert ist.

21. Vorrichtung nach einem der Ansprüche 13 bis 20,
**dadurch gekennzeichnet,**
**dass** die Simulationsdatenbasis (09), insbesondere die Simulationsumgebung (11), zumindest ein Geländemodell (29) umfasst, welches ein reales Gelände (30) geospezifisch abbildet, wobei zumindest Teile (26) des Geländemodells (29) gemäß einer Geländeklassifikation klassifiziert sind.
